(19) Europäisches Patentamt
European Patent Office
Office européen des brevets

(11) **EP 2 239 148 A2**

(12) **EUROPÄISCHE PATENTANMELDUNG**

(43) Veröffentlichungstag:
**13.10.2010 Patentblatt 2010/41**

(21) Anmeldenummer: **10003339.8**

(22) Anmeldetag: **25.03.2010**

(51) Int Cl.:
*B42D 3/00* *(2006.01)*    *B42D 3/04* *(2006.01)*
*B42D 3/12* *(2006.01)*    *B42F 5/00* *(2006.01)*
*B42F 7/06* *(2006.01)*

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA ME RS**

(30) Priorität: **26.03.2009   DE 102009014381**
**03.05.2009   DE 202009006330 U**

(71) Anmelder: **Huth, Andreas**
**04229 Leipzig (DE)**

(72) Erfinder: **Huth, Andreas**
**04229 Leipzig (DE)**

(74) Vertreter: **Dinter, Tilo**
**Nonnenstrasse 11b**
**04229 Leipzig (DE)**

(54) **Behätersystem zur systematischen Ausbewahrung und Präsentation von Informationsmaterialien und Verfahren zur Herstellung desselben**

(57)    Die Erfindung betrifft ein Behältersystem zur systematischen Aufbewahrung und Präsentation von Informationsmaterialien, insbesondere von Informationsträgern mit Informationen über touristische Sehenswürdigkeiten, Reisebeschreibungen, Landkarten, Fotos, Dokumenten, Schriften und ähnlichen einzuordnenden Informationsträgern oder Sammlerobjekten. Aufgabe der Erfindung ist es, ein Behältersystem und ein Verfahren zur Herstellung desselben zu schaffen, das eine optisch einprägsame, übersichtliche und werbewirksame Gesamtansicht aufweist und eine einfachere Zuordnung und Auffindung der einzelnen Behälter ermöglicht. Gelöst wird diese Aufgabe dadurch, dass das Behältersystem aus Behältern gebildet wird, die jeweils mindestens zwei unterschiedliche hierarchische Ordnungsebenen optisch repräsentierende Baugruppen aufweisen und dass zwecks Unterscheidung der den Behältern zugeordneten hierarchischen Ordnungsebenen diese Baugruppen unterschiedliche graphische Gestaltungsmerkmale aufweisen.

Vorteilhaft wird die dem Nutzer das Behältersystems zugewandte Baugruppe des jeweiligen Behälters mit einer Sotarzellenfolie verbunden, die zur Spannungsversorgung eines zur Kennzeichnung des jeweiligen Behälters dienenden und ebenfalls mit dieser Baugruppe verbundenen lichtemittierenden Bauelementes dient.

Fig. 1

EP 2 239 148 A2

**Beschreibung**

Die Erfindung betrifft ein Behältersystem zur systematischen Aufbewahrung und Präsentation von Informationsmaterialien, insbesondere von Informationsträgern mit Informationen über touristische Sehenswürdigkeiten, Reisebeschreibungen, Landkarten, Fotos, Dokumenten, Schriften und ähnlichen einzuordnenden Informationsträgern oder Sammlerobjekten. Weiterhin bezieht sich die Erfindung auf ein Verfahren zur Herstellung des Behältersystems. In der DE 10 2005 014 363 A1 wird ein System zur Etikettierung von Ordnungsmitteln beschrieben, bei dem der jeweilige als Ordnungsmittel dienende Behälter (z. B. Aktenordner) mit einem multifunktionalen Abdeckelement (Rückenschild) versehen wird. Durch die systematischen Aufbewahrung der Dokumente und Gegenstände soll mit dem System eine schnellere und effizientere Wiederauffindung erreicht werden. Die Kennzeichnung des jeweiligen Behälters erfolgt danach mittels einer als multifunktionales Abdeckelement (Rückenschild) dienenden Baugruppe. Ausgehend von den in dieser Schrift beschriebenen Basistypen ist eine auf das jeweiligen Ordnungsmittel bezogene programmierbar veränderbare Unterscheidung untereinander sowie deren Auffindung möglich. So wird bei einem ersten vorgestellten Basistyp die Bekanntheit des Inhaltes des Ordnungsmittels durch häufige Nutzung vorausgesetzt. Der Inhalt wird mittels alphanumerischer Zeichen dargestellt und das Label kann durch einen eingebauten Transmitter und Receiver ständig aktualisiert werden. Bei einem weiteren Basistyp ist es möglich, mittels gleicher Technik die Auswahl des Ordners aus einem auf den Rechner installierten Dokumentenmanagementsystems (DMS) und die Aktivierung einer am Ordner-Label vorhandenen Leuchtfläche mittels Infrarotsteuerung durchführen zu können. Über das DMS wird dem Nutzer mitgeteilt, in welchem Raum sich der Ordner befindet. Bei weiteren zwei beschriebenen Basistypen kommen lediglich Identnummern zur Anwendung, die entweder direkt auf dem Label aufgebracht sind oder durch ein LC-Display dargestellt werden. Die durch die Identnummer codierte Inhaltsangabe des Ordners ist für den Archivbereich mit seltener Zugriffshäufigkeit gedacht. Über das DMS erfolgt die Suche des benötigten Ordners, die Ermittlung der Identnummer, die Raumbezeichnung und Angabe des Aufbewahrungsbehältnisses. Nachteilig ist an diesem Behältersystem die fehlende Möglichkeit des Nutzers sozusagen "auf einen Blick" eine Zuordnung bzw. Erkennung eines oder mehrerer gesuchter Behälter innerhalb des Behältersystem vornehmen zu können.

Bekannt ist nach der DE 82 01 083 ein Reiseführer mit einer Kunststoffhülle im Form einer Bucheinhanddecke, der mindestens teilweise eingehüllte Landkarten beziehungsweise Stadtführer mit Stadtplänen aufweist. Die zur Anwendung kommenden Schutzhüllen dienen zum Schutz vor Nässe, Verschmutzung und Beschädigung. Bei diesem Reiseführer sind alle Umschlagseiten trotz des Schutzumschlags sichtbar angeordnet

und darüber hinaus ist auch die Karte beziehungsweise der Stadtplan von außen sichtbar eingebracht. Bei nutzungsgemäßem Gebrauch des Führers kann die Karte leicht aus der Kunststoffschutzhülle entnommen oder eingeschoben werden, ohne dass die Gefahr einer Beschädigung der Schutzhülle entsteht. Dazu wird der Reiseführer beziehungsweise Stadtführer und die Karte in ihrer körperlichen Gestaltung gegenseitig angepasst und aufeinander abgestimmt. Der Reiseführer ermöglicht es, dass alle Umschlagseiten und die Karte von außen sichtbar bleiben, und zwar selbst dann, wenn der Reiseführer zwischen andere Bücher in ein Bücherregal gestellt wird. Dazu besteht der Brücken der Kunststoffhülle aus transparenten oder durchsichtigen Kunststoff. Nachteilig an diesem Reiseführer ist, dass ein systematische und leichtes Auffinden eines bestimmten eingeordneten Reiseführers nicht möglich ist. Weiterhin bekannt ist nach der DE 380 734 5 ein Buchband, der insbesondere als Reiseführer mit Landkarten und Stadtplänen für Informationen über Länder und Städte oder dergleichen ausgebildet ist. Bei diesem Reiseführer sind die Informationen nach auswechselbaren Gesichtspunkten auf kartenähnlichen Informationsträgern aufgebracht. Dabei sind die Informationskarten auf buchähnlichen Seiten auswechselbar angeordnet und diese Seiten zu einem Buchband zusammengefasst. Der Nutzer kann sich damit eine Bibliothek anlegen, in der alle ihn je interessierenden Informationen leicht zugänglich gespeichert sind. Der Nutzer kann sich eine Gesamtreiseführer zusammenstellen und mittels Etuis ein kleines, eigenständig zusammengestelltes Buch für seine Reise erstellen. Man erhält dadurch einen leicht tragbaren und mit beliebigen Informationskarten bestückbaren Führer, ohne dass irgendwelche Seiten zerstört oder kopiert werden müssen. Nachteilig an diesem Buchband ist jedoch, dass keine übersichtliche Archivierung und eine damit verbundene leichte Wiederauffindung der individuell zusammengestellten Buchbände möglich ist, sowie die Anwendungsgebiete auf umfangreiche Sammelgebiete wie beispielsweise Sammlungen von Dokumenten, Schriften und ähnlichen nicht erweiterbar sind. Ebenso ist keine werbewirksame, übersichtliche Anordnung der Buchbände beim Verkauf möglich.

Nach dem Stand der Technik sind für die Gestaltung derartiger Behälter, wie nach der DE 101 03 436 A1 beschrieben, für ein Album gestaltete Seiten bekannt, insbesondere für ein Fotoalbum zwecks Ablage von Fotos oder anderer Darstellungen im APS-Format (Advanced Photo System). Mit dieser Lösung ist es möglich, Fotos oder andere Dokumente im APS-Format in ein Album so einzuordnen, dass die Reihenfolge der Fotos unabhängig vom jeweiligen Format beibehalten werden kann und dabei keine erheblichen Platzverluste entstelaen. So können die Fotos in beliebiger Reihenfolge themenbezogen in unterschiedlicher Formatreihenfolge einsortiert werden. Dazu weist die Seite mindestens eine Fläche auf, die der Breite eines Fotos im Panoramaformat/Querformat und in der Höhe mindestens dreimal der Höhe eines Fotos im Querformat aufweist. Die maximalen Abmessungen entsprechen dabei der Breite, die sich aus der Breite eines Fotos im Panorama/Hochformat plus der Breite eines Fotos im High-Definition/Querformat zusammensetzt, und der Höhe, die sich aus der Höhe eines Fotos im Panoramaformat/Hochformat plus der Höhe eines Fotos im Querformat zusammensetzt. Die Fotos oder Abbildungen können so trotz unterschiedlicher Formatgröße beliebig auf einer Seite angeordnet werden, ohne dass Platzverluste entstehen. Nachteilig an dieser Lösung ist jedoch, dass eine optisch gefällige symmetrische Anordnung nicht möglich ist und für die Positionierung zusätzliche Mittel wie Abstandshalter erforderlich sind.

Die Aufgabe der Erfindung besteht deshalb darin, ein Behältersystem und ein Verfahren zur Herstellung desselben zu schaffen, das eine optisch einprägsam, übersichtliche und werbewirksame Gesamtansicht aufweist und eine einfachere Zuordnung und Auffindung der einzelnen Behälter ermöglicht. Gelöst wird die Aufgabe durch das Behältersystem mit den beschreibenden Merkmalen nach Patentanspruch 1. Vorteilhafte Weiterbildungen des Behältersystems werden mit den Merkmalen der Patentansprüche 2 bis 15 und des Verfahrens mit den Merkmalen 16 bis 19 beschrieben. Mit der erfindungsgemäßen Lösung ist ein graphisch gestaltetes hierarchisches Behältersystem geschaffen worden, das für den Nutzer eine leichte, übersichtliche und optisch gefällige Gesamtübersicht bietet sowie mittels einfacher technischer Ortungamöglichkeiten eine Auffindung der Behälter in Verbindung mit einer werbewirksamen Präsentation des Bchältersystems vorgenommen werden kann. Die einzelnen Baugruppen des Behältersystems repräsentieren dabei jeweils eine zugeordnete hierarchische Ebene des Ordnungssystems. Sie können lösbar oder unlösbar miteinander verbunden werden. Durch die Lösbarkeit der Baugruppen kann der Nutzer das Behältersystem universell für seine Zwecke einrichten. Zwecks Erreichung einer hohen Werbewirksamkeit des Behältersystems werden auf jeder Rückenbaugruppe Solarzellenfolien aufgebracht, die zur Spannungsversorgung von lichtemittierenden Bauelementen dienen. Mit diesen Bauelementen wird auf der dem Betrachter zugewandten Fläche des jeweiligen Behälters die dem Behälter zugeordnete oberste hierarchische Ebene signalisiert. Ebenso werden auf dieser Fläche des Behälters optische Hinweise auf die nächsten untergeordneten hierarchischen Ebenen gegeben. Der Nutzer erhält so einen leichten Überblick über alle Behälter des Behältersystems. Die jeweiligen optischen Kennzeichen der hierarchischen Ebenen sind einheitlich gestaltet und ermöglichen so dem Benutzer ein einfaches Wiederauffinden des gesuchten Behälters. Um das Wiederauffinden vorteilhaft zu gestalten, wird den lichtemittierenden Bauelementen eine

RFID-Baugruppe zugeordnet, die nach Empfang eines codierten Signales die jeweils zugeordneten lichtemittierenden Bauelemente mit der vollen elektrischen Spannung versorgt. Für eine vorgegebene Zeitspanne sind so die jeweiligen gesuchten Behälter gut sichtbar. Der Standort kann dadurch auch bei Vorhandensein mehrerer Behältersysteme schnell ermittelt werden. Die Werbewirksamkeit während dieser Zeitspanne wird durch die gute Sichtbarkeit, beispielsweise durch verstärkte Sichtbarkeit des Markenzeichens, erhöht.

Vorteilhaft werden die Behälter so gestaltet, dass auf deren Oberflächen eine einfache Positionierung der Informationsmaterialien unabhängig von den zur Anwendung kommenden standardisierten Formaten und die Entstehung eines optisch gefälligen, symmetrischen und für jede Behälterfläche unterschiedlichen Hintergrundes ermöglicht wird.

Nachfolgend soll das erfindungsgemäße Behältersystem anhand eines Ausführungsbeispiels näher erläutert werden. In der Zeichnung zeigen

| Fig. 1: | die schematische Gesamtansicht des Behälters, |
|---|---|
| Fig. 2: | den aufgeklappten Zuschnitt des Behälters, |
| Fig. 3: | den Zuschnitt des Behälters mit mehrfachen Innenteilen, |
| Fig. 4: | den asymmetrischen Zuschnitt des Behälters, |
| Fig. 5: | den Zuschnitt des Behälters mit Deckklappen und |
| Fig. 6: | die schematische Darstellung der Suchsteuerung. |
| Fig. 7: | das Grundmuster, |
| Fig. 8: | die Fotoanordnung mit Hochformat 10x15, |
| Fig. 9: | die Fotoanordnung mit Hochformat 9x13, |
| Fig. 10: | die Fotoanordnung in mehrzeiliger Anordnung mit Querformat 10x7, |
| Fig. 11: | die Fotoanordnung mit Hochformat 5x7,6, |
| Fig. 12: | die Fotoanordnung mit Querformat 5x7,6, |
| Fig. 13: | die Fotoanordnung in versetzter Anordnung mit Hochformat 5x7,6, |
| Fig. 14: | die Fotoanordnung in beabstandeter Anordnung mit Hochformat 5x7,6 |
| Fig. 15. | die Fotoanordnung in mehrzeiliger Anordnung mit Querformat 5x7,6, |
| Fig. 16: | das Querformat der Materialfläche und |
| Fig. 17: | das Längsformat der Materialfläche. |

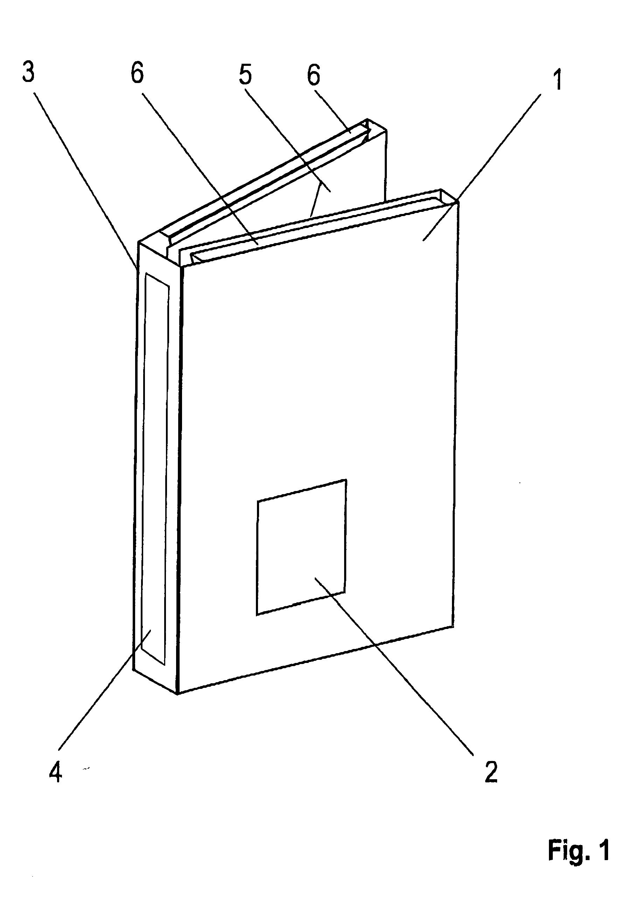

In der Figur 1 ist die schematische Gesamtansicht des Behälters wiedergegeben. Sie zeigt den Grundkörper 1 mit der aufgebrachten Seitenbaugruppe 2 und die mit dem Grundkörper 1 beweglich verbundenen Rückenbaugruppe 3. Auf der Rückenbaugruppe 3 ist eine Solarzellenfolie 4 aufgebracht, die zur Spannungsversorgung von lichtemittierenden Elementen dient. Weiterhin sind seitlich am Grundkörper 1 beweglich befestigte und nach innen klappbare Innenklappen 5 angebracht. Die Ober- und Unterkanten des Grundkörpers 1 sind jeweils mit nach innen klappbare Deckklappen 6 beweglich verbundenen. Die einzelnen Baugruppen repräsentieren optisch die unterschiedlichen hierarchischen Ordnungsebenen. Bei einer Nutzung des Behältersystem zwecks Aufnahme von Dokumenten, Landkarten, Fotos, Reisebeschreibungen u. ä. in Behältern eines Reiseführers bedeutet dies beispielsweise die graphische Kennzeichnung des Landes als höchste hierarchische Ordnungsebene auf der Rückenbaugruppe. Da sich die zweite Ordnungsebene dann auf die Städte des Landes bezieht, erhalten alle Behälter, die für die ausgewählten Städte des Landes vorgesehen sind, neben der graphischen Kennzeichnung der Stadt auch das gleiche graphische Kennzeichnen des Landes. In der dritten Ordnungsebene werden dann beispielsweise die touristischen Sehenswürdigkeiten der Stadt graphisch gekennzeichnet usw. So erhält dann der Behälter mit der zugeordneten Sehenswürdigkeit jeweils eine optisch repräsentative Baugruppe für das Land, der Stadt und der Sehenswürdigkeit.

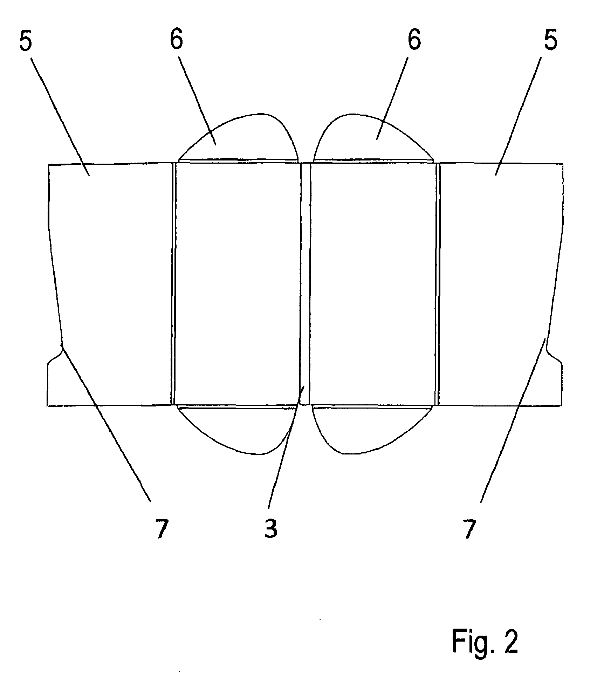

Der in Figur 2 dargestellte Zuschnitt des Behälters zeigt die nach innen zur Rückenbaugruppe 3 hin klappbaren Innenklappen 5 mit den eingebrachten Griffmulden 7. Die Form der Griffmulden 7 ist so gewählt, dass sie im geschlossenen Zustand des Behälters eine leichte, widerstandslose Einführung der Finger unter die Innenklappen 5 und damit ein einfaches Öffnen bzw. Schließen des Behälters ermöglicht. Die Deckklappcn 6 weisen eine derart abgerundete Form auf, die ebenfalls ein leichtes, widerstandsloses Schließen und Öffnen des Behälters beim Aufklappen bzw. Zusammenklappen der Innenklappen 5 unter gleichzeitiger Mitnahme der Deckklappen 6 ermöglicht.

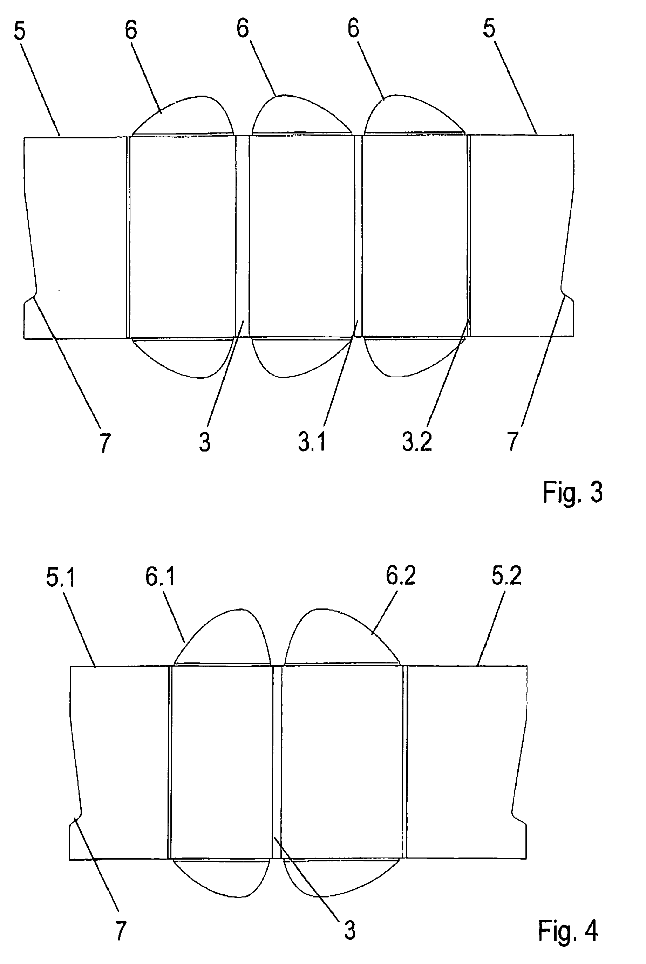

In der Figur 3 ist der Zuschnitt des Behälters mit mehreren Innenklappen 5 dargestellt. Im zusammengeklappten Zustand weist der Behälter bei dieser Ausführungsform mehrere Aufnahmefächer für Informationsmatcrialien auf. Die inneren Rückenbaugruppen 3.1 und 3.2 sind von ihrer Größe her so an die übrigen Abmessungen angepasst, dass sie sich problemlos und ohne mechanischen Widerstand zum Gesamtbehälter zusammen klappen lassen. Der Gesamtbehälter besitzt unabhängig von der Anzahl der Innenfächer eine einheitliche Höhe. Bei der Schaffung von mehreren Variantcn des Behältersystems, um beispielsweise mit der einen Variante eine leicht zu transportierende Ausführungsform und mit der anderen Variante die Möglichkeit für die Aufnahme von Informationsmaterialien mit unterschiedlichen bereits vorhandenen Formaten zu schaffen, sind unterschiedliche Breiten der Behälter erforderlich. Um dennoch die angestrebte Übersichtlichkeit für den Benutzer zu erreichen, wird die einheitliche Höhe der dem Benutzer zugewandten Baugruppe der Behälter beibehalten. Ebenso verhält es sich mit der grundsätzlichen Gestaltung der Rückenbaugruppe.

Bei dem in der Figur 4 dargestellten asymmetrischen Zuschnitt des Behälters sind die Innenklappen 5 unterschiedlich groß. Sie dienen zur Bildung von Innenfächern für die Aufnahme von Informationsmaterialien mit unterschiedlichen Formaten. Um das einheitliche Format des Gesamtbehälters hinsichtlich seiner äußeren Abmessungen zu wahren, besitzt die breite Innenklappe 5.2 das Breitenmaß des einheitliche Formates. Ebenso verhält es sich mit der Breite der großen Deckklappe 6.2. Die Bereite der schmalen Innenklappe und der kleinen Deckklappe 6.1 entspricht der Breite des kleineren aufzunehmenden Formates der Informationsmaterialien.

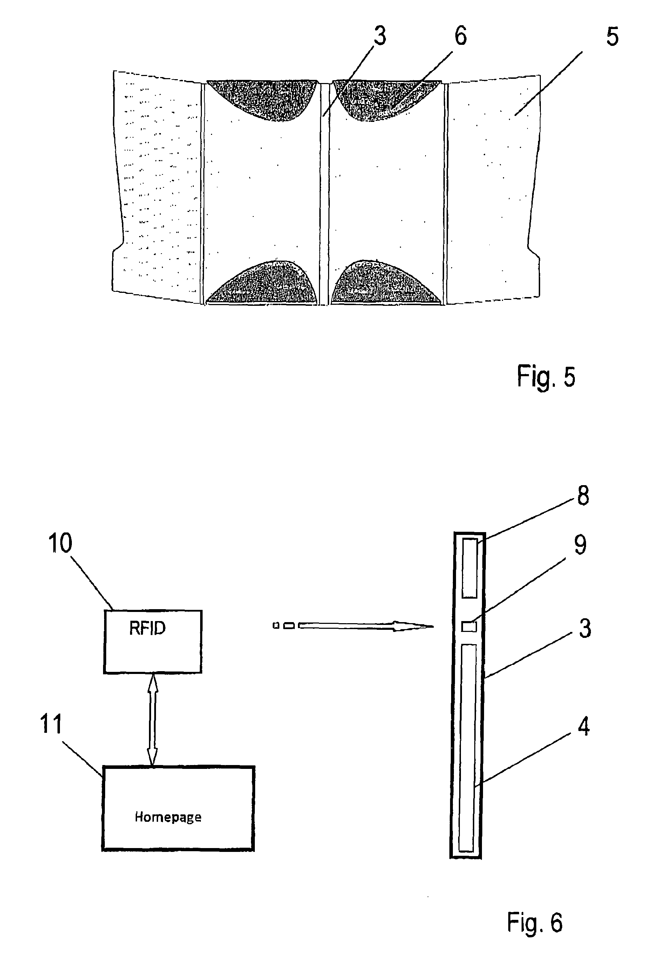

Die Darstellung in der Figur 5 zeigt die nach innen geklappten Deckklappen 6. Die sichtbaren Flächen der Deckklappen 6 dienen zur Wiedergabe von Werbeanzeigen und ähnlichen. Die sichtbare Gesamtinnenfläche der aufgeklappten Innenklappen 5 gibt dabei eine Gesamtansicht, ein Foto, eine Landkarte o. ä. wieder.

In der Figur 6 ist die schematische Darstellung einer möglichen Steueranordnung für das einfache und werbewirksame Wiederauffinden eines oder mehrerer Behälter innerhalb des hierarchischen Ordnungssystems der Behälteranordnung aufgezeigt. Für die optische Erkennung der zugeordneten Ordnungsebene des jeweiligen Behälters, der beispielsweise als Reiseführer ausgebildet sein kann, dient das auf der Rückenhaugruppe 3 angeordnete lichtemittierende Bauelement 8. Dieses lichtemittierende Bauelemente 8 kann selbst die Form der entsprechenden Kennzeichnung der Ordnungsebene aufweisen oder zur Beleuchtung der Kennzeichnung dienen. Bei der Auswahl und Ortung der gesuchten Behältnisse eines Landes mittels dem elektronischen Ortungssystem würden alle Behältnisse mit den grafische Kennzeichnungen des Landes optische Signale (Aufleuchten, Blinken u. ä.) abgeben. Würde die Auswahl nur eine bestimmte Stadt betreffen, so würden nur die graphischen Kennzeichen der Behälter mit den Baugruppen der zweiten Ordnungsebene, die der ausgewählten Stadt zugeordnet sind, optische Signale abgeben. Dabei können elektrochromatische Materialien zur Anwendung kommen. Die Kennzeichnung besteht beispielsweise bei einem als Reiseführer ausgebildeten Behälter aus der Benennung des Landes als oberste Ordnungsebene und den Hinweisen auf die untergeordneten Ordnungsebenen wie Regionen, Städte, touristische Sehenswürdigkeiten u. a. in die der Reiseführer eingeordnet ist. Die höchste Ordnungsebene besitzt bei der Kennzeichnung eine höhere optische Wirksamkeit als die zugeordnete Untergruppe der Ordnungschene. Als Spannungsversorgung für das lichtemittierende Bauelement 8 dient die ebenfalls auf der Rückenbaugruppe 3 angeordnete Solarzellenfolic 4. Sie erzeugt die elektrische Spannung durch das Licht der Umgebung und passt sich so den vorhandenen Lichtverhältnissen an. Das Verhältnis der dem lichtemittierenden Bauelement 8 zugeleiteten Spannung zur maximal erzeugbaren Spannung durch die Solarzellenfolie 4 ist einstellbar. Die maximal erzeugte Spannung wird dem lichtemittierenden Bauelement 8 dann zugeleitet, wenn mittels des ebenfalls auf der Rückenbaugruppe 3 angeordneten RFID-Empfängers 9 das entsprechende Signal erzeugt wird. Ausgelöst wird dieses Signal durch Vergleich der in diesem RFID-Empfänger 9 abgespeicherten Codesignale mit denen durch einen funktionell zugeordneten RFID-Sender 10 gesendete Signale. Die Codierung erfolgt auf der Grundlage der Zuordnungsstelle im hierarchischen System und/oder des Inhaltes (Themas) der im Behälter enthaltenen Informationsmaterialien. Stimmen die codierten Sende- und Empfangssignale übercin so wird der gesuchte Behälter identifiziert und die maximal erzeugbarc Spannung dem liclatemittierenden Bauelemente 8 zugeleitet. Durch die erhöhte Leuchtkraft des identifizierten Behälters hebt sich die Kennzeichnung dieses Behälters von den umgebenden Behältern ab und wird für den Suchenden erkennbar. Dabei wird zur Erhöhung der Werbewirksamkeit gleichzeitig das jeweilige Markenzeichen deutlicher sichtbar. Die Dauer der erhöhten Spannungszuführung kann vorgegeben werden um einen erneuten Suchvorgang zu ermöglichen. Die jeweiligen codierten Signale für die Auffindung eines gewünschten Behälters können beispielsweise über eine Internetverbindung von der Homepage 11 des Anbieters des Behältersystem beziehungsweise des Verlages der Reiseführer herunter geladen werden. So wird es möglich, dass die Behälter mit den entsprechenden Informationsmaterialien auf der Homepage 11 ausgesucht und gezielt bei einem Vertreiber (z. B. Buchhandlung) mittels des als Sender fungierenden RFLD-Bausteines 10 durch Aussendung des codierten Signales leicht aufgefunden werden können.

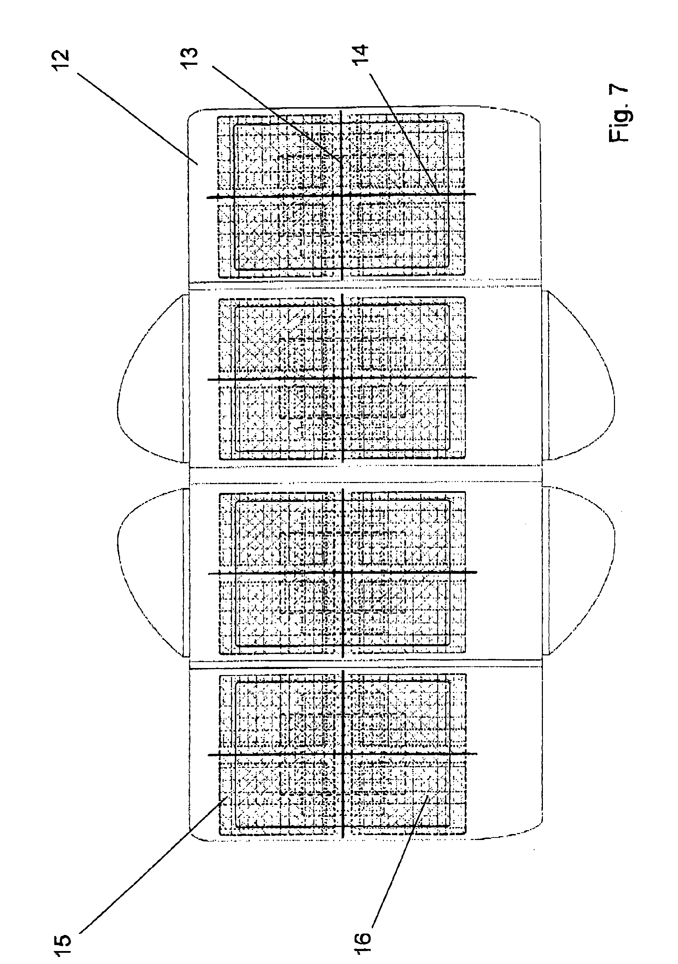

In der Figur 7 ist das Grundmuster wiedergegeben, das auf den aufgeklappt dargestellten Innenflächen des Behälters 12 aufgebracht ist. Ebenso ist eine Anordnung des Grundmusters auf den Ausenlfächen des Behälters 12 möglich. Dieses Grundmuster dient als Positionicrungshilfe der aufzubringenden Fotos 17 mit unterschiedlichen standardisierten Formaten. Es setzt sich aus mitgedruckten streifenförmigen Markierungsflächen zusammen, die jeweils eine unterschiedlich starke Farbdichte aufweisen. Diese horizontal und vertikal angeordneten Markierungsflächen 15, 16 sind symmetrisch jeweils einer horizontalen und einer vertikalen Bezugslinie 13, 14 zugeordnet. Die Breite der Markierungsfläehen 15, 16 ist unterschiedlich groß und den zu positionierenden einzelnen Formaten angepasst. Die Flächen, an denen sich die streifenförmigen Markierungsflächen 15, 16 kreuzen, weisen eine entsprechend größere Farbdichte und einen damit verbundenen dunkleren Farbton auf. Die äußeren Abmessungen der Positionsmuster sind dabei ebenfalls den standardisierten Formaten angepasst. Das hier dargestellte beispielsweise Grundmuster dient zur Positionierungshilfe folgender Formate:

100x150 mm

90x130 mm

100x70 mm

50x76 mm

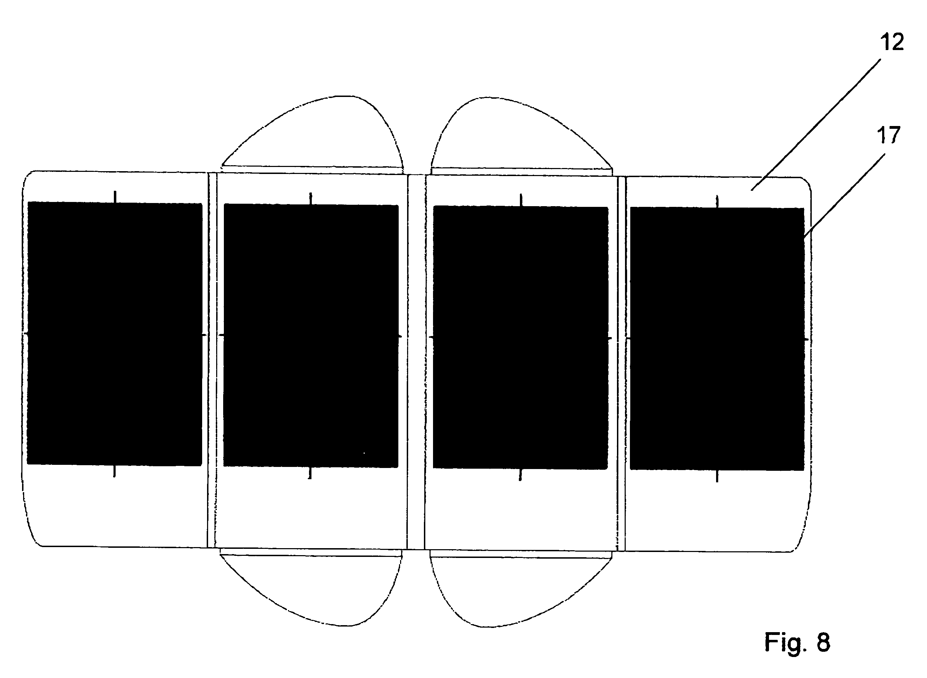

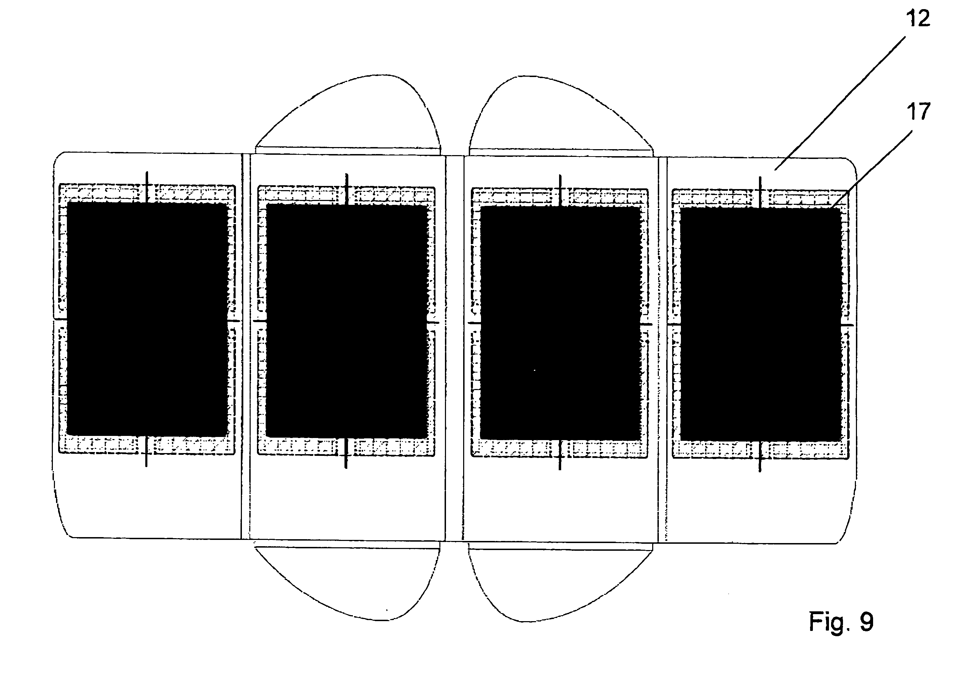

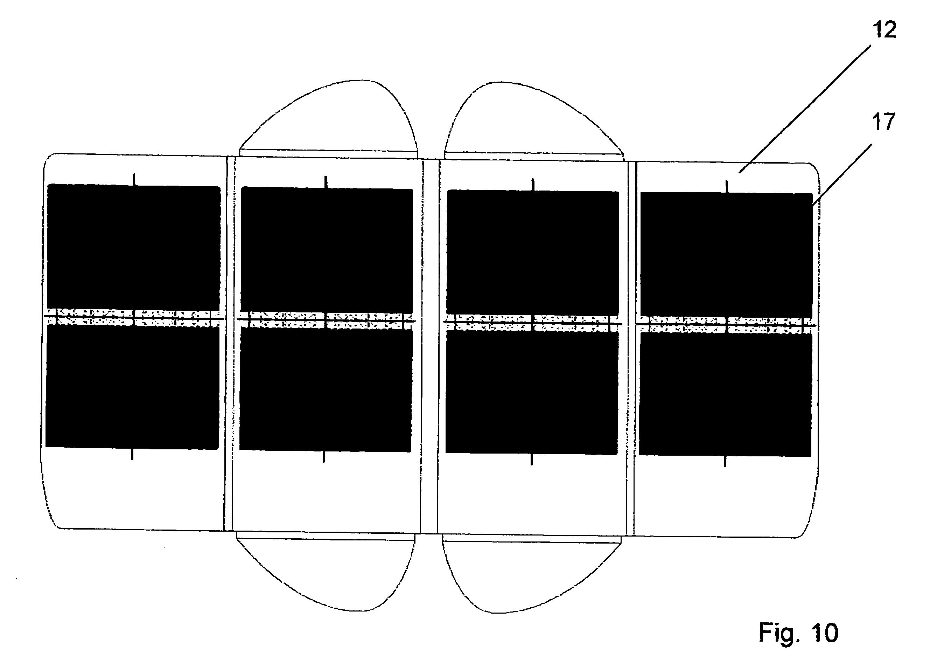

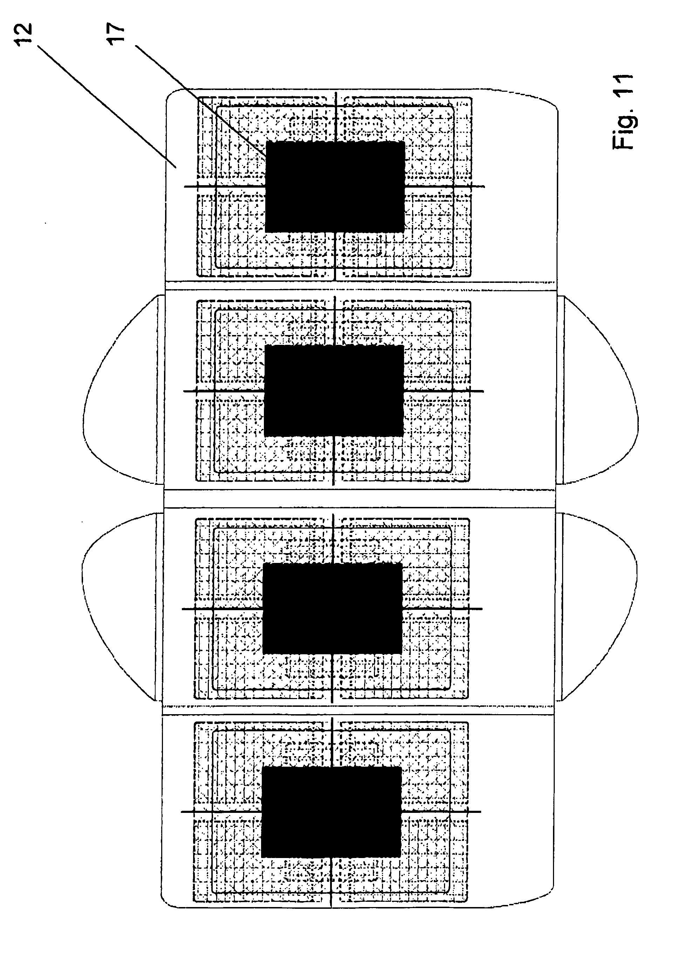

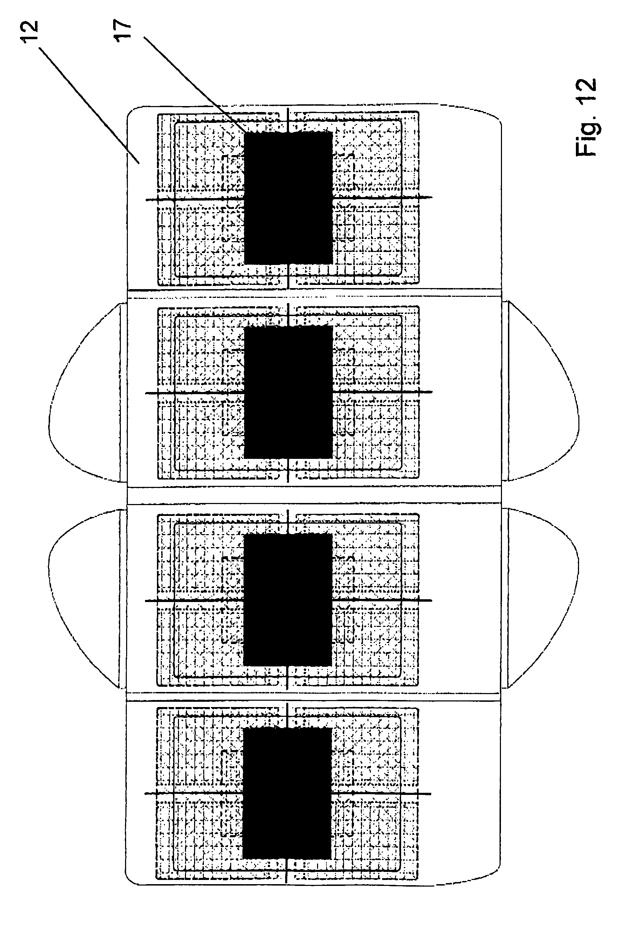

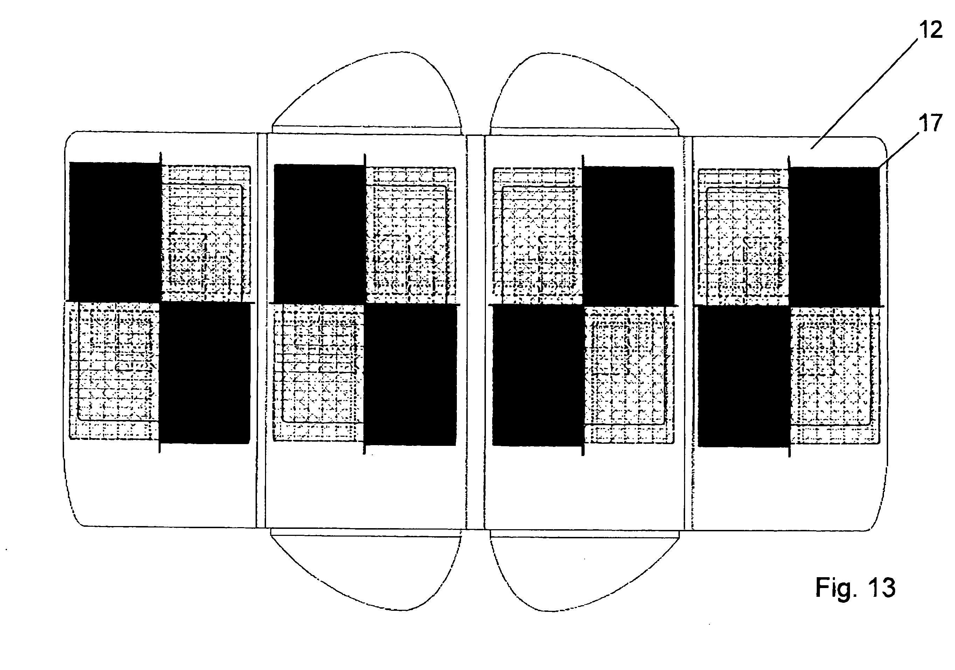

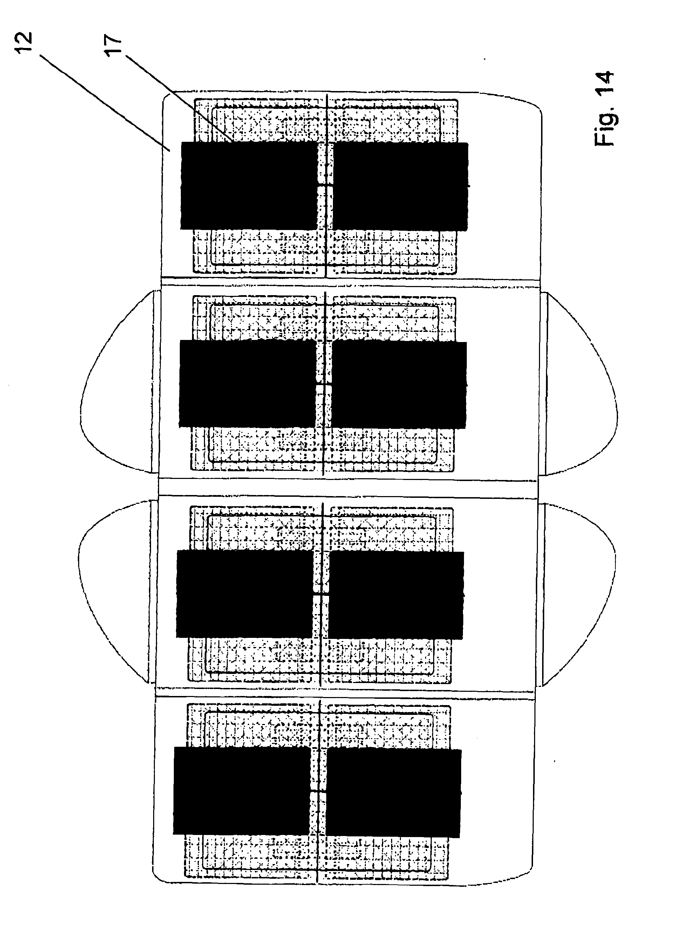

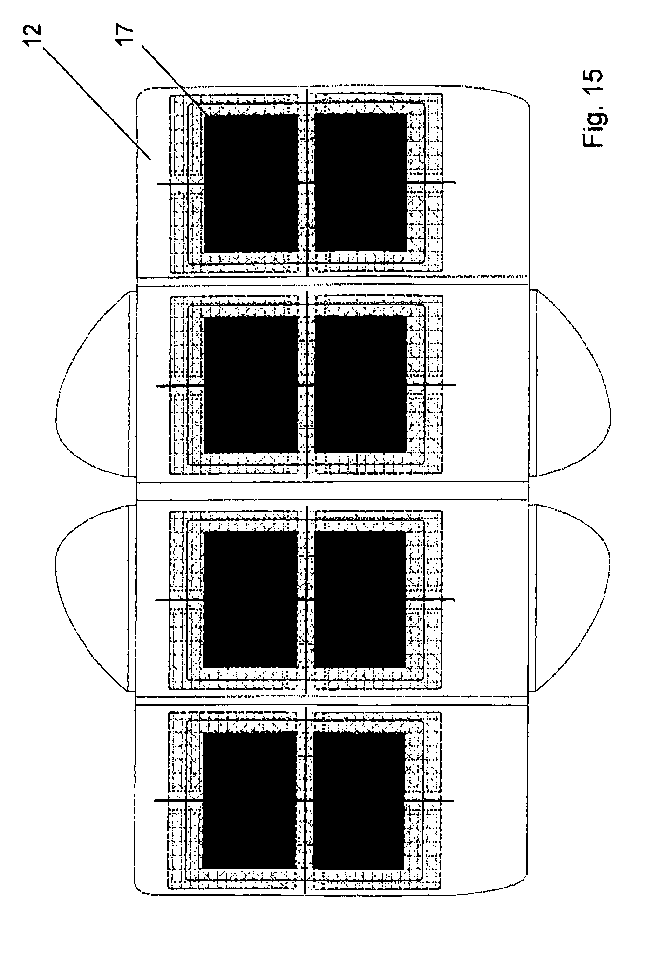

Der Abstand zwischen der Ober- und Unterkante des mitgedruckten Grundmusters entspricht, wie auch in Figur 8 abgebildet, dem Höhenmaß (150 mm) des größten Formates. Die jeweilige Positionierung der Fotos 17 wird durch Nutzung der Musterkanten der horizontale und vertikalen Markierungsflächen 15, 16 als Anlagekante vorgenommen. Wird die vorgesehene symmetrische Position der einzuordnenden Fotos 17 auf den Innenflächen des Behälters 12 eingenommen, so ergibt sich im Umgebungsbereich der Fotos 17 ein symmetrisches Muster. Je nach Format und Reihenfolge der einzuordnenden Fotos 17 ist das jeweilige sich ergebende symmetrische Umgebungsmuster unterschiedlich. Durch die sich ergebenden unterschiedlichen Muster erhält man abwechslungsreiche optisch gefällig gestaltete Hintergründe der Behälterflächen. Unterschiedliche Positionierungen, unabhängig vom Format und Reihenfolge der einzuordnenden Fotos 17, werden mit den Anordnungen in den Figuren 8 bis 15 wiedergegeben.

Mittels des erfindungsgemäßen Verfahrens werden den jeweiligen hierarchischen Ebenen einheitlich vorgegebenen graphischen Kennzeichnungen der Behälter weitere individuell gestaltbare Textteile zugeordnet. So kann diese Gestaltung beispielsweise durch eine auf die graphische Kennzeichnungsfläche gelegte transparente Fläche mit Textteil erfolgen. Die Verbindung der graphischen Kennzeichnungsteile mit den frei gestalteten Textteilen erfolgt entweder mittels eines stationären Computcrsystems oder über das Internet. Dazu werden die textlichen Vorlagen in digitale Daten gewandelt und dem hiternetdienstleister zugeleitet. Unter Anwendung von steuerbaren 3-D-Darstellungen können die Behälter gestaltet und das Behältersystem ausgewählt werden. Neben der Gestaltung der Behälter bzw. des Behältersystems können auch die aufzubewahrenden Informationsmaterialicn in dreidimensionaler Ansicht frei gestaltet und in der Gesamtansicht betrachtet werden. Die Daten des fertig gestalteten Behältersystems und die Codesignale für die Wiederauffindung der einzelnen Behälter werden heruntergeladen und in einem mobilen Datenspeicher (z. B. USB-Stick) abgespeichert. Die Wiederauffindung der einzelnen Behälter erfolgt im Archiv des Nutzers oder bei den kommerziellen Anbietern über RFID-Signale. Die abgespeicherten Codesignale der mit einem RFID-Sender ausgestatteten mobilen Datenträger werden mit denen im RFID-Empfänger abgespeicherten Codesignale der Behälter verglichen und bei Übereinstimmung entsprechende optische und/oder akustische Signale ausgelöst.

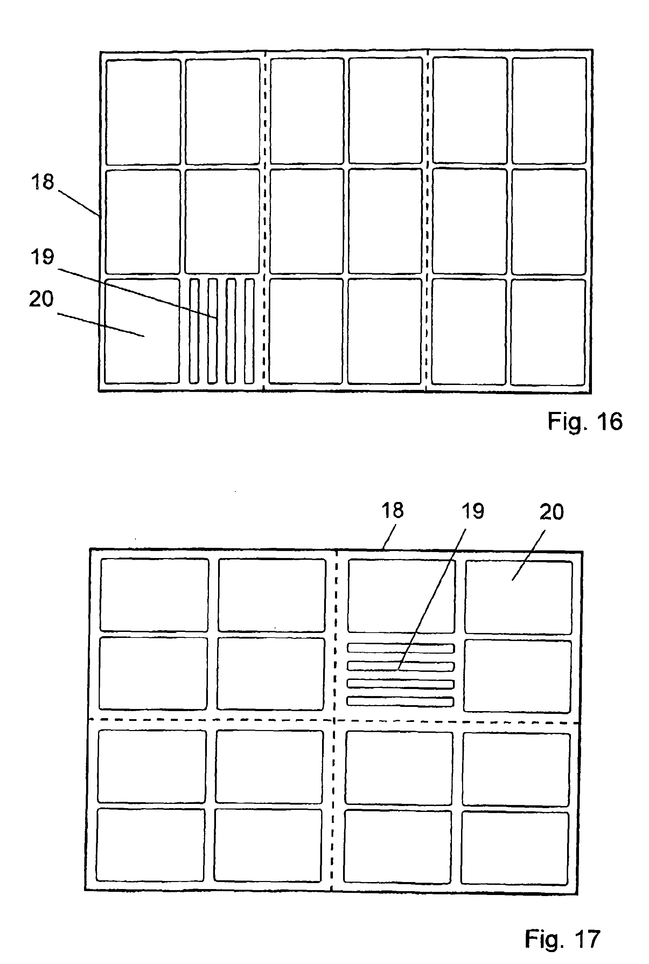

Mittels der Figuren 16 und 17 werden Anordnungen der graphischen und textlichen Gestaltungsflächen 19 und 20 für die Kennzeichnungen der einzelnen Ordnungsebenen der Behälter wiedergegeben. Die Flächen der beispielsweise in Etikettenform auf die Materialfläche 18 ausgedruckten bzw. aufgebrachten textlichen und graphischen Gestaltungen sind gleichgroß gehalten. Um die Materialfläche 18 vollständig zu nutzen und so Materiatverluste zu vermeiden, werden ausgehend von standardisierte Formaten (z. B. A4) die für die Gestaltungen zur Verfügung stehenden Flächen so gewählt, das je nach genutzter Anordnung im Quer- oder Hochformat die Anordnung der Gestaltungsflächen 19 und 20 auf der Materialfläche 18 gleichzeitig auch für standardisierte Fotoformate (z.B. 10 x 15 cm) oder standardisierte Druckformate (z. B. DIN-Lang 10,5 x 21 cm) ohne Flächenverluste genutzt werden können. Die bei dem Format DIN A4 gewählten Gestaltungsflächen 19 und 20 haben die Abmessungen 6,5 x 4,5 cm.

Bezugszeichen

| | |
|---|---|
| 1 | Grundkörper |
| 2 | Seitenbaugruppe |
| 3 | Rückenbaugruppe |
| 3.1 | innere Rückenbaugruppe |
| 3.2 | innere Rückenbaugruppe |
| 4 | Solarzellenfolie |
| 5 | Innenklappe |
| 5.1 | schmale Innenklappe |
| 5.2 | breite Imenklappe |
| 6 | Deckklappe |
| 6.1 | kleine Deckklappe |
| 6.2 | große Deckklappe |
| 7 | Griffmulde |
| 8 | lichtemittierendes Bauelement |
| 9 | RFID-Empfänger |
| 10 | RFID-Sender |
| 11 | Homepage |
| 12 | Behälter |
| 13 | horizontale Bezugslinie |
| 14 | vertikale Bezugslinie |
| 15 | horizontale Markierungsflächc |
| 16 | vertikale Markierungsfläche |
| 17 | Foto |
| 18 | Materialfläche |
| 19 | graphische Gestaltungsfläche |
| 20 | textliche Gestaltungsfläche |

**Patentansprüche**

1. Behältersystem zur systematischen Aufbewahrung von Informationsmaterialien, insbesondere der Informationsmaterialien im Zusammenhang mit Reiseführern, deren jeweilige Behälter zwecks Unterscheidung unterschiedliche optische Kennzeichnungen aufweisen, **dadurch gekennzeichet, dass** das Behältersystem aus Behältern gebildet wird, die jeweils mindestens zwei unterschiedliche hierarchische Ordnungsebenen optisch repräsentierende Baugruppen aufweisen und dass zwecks Unterscheidung der den Behältern zugeordneten hierarchischen Ordnungsebenen diese Baugruppen unterschiedliche graphische Gestaltungsmerkmale aufweisen.

2. Behältersystem nach Patentanspruch 1, **dadurch gekennzeichnet, dass** die optisch kennzeichnenden Baugruppen mit dem jeweilig zugeordneten Behälter lösbar verbunden sind.

3. Behältersystem nach Patentanspruch 1, **dadurch gekennzeichnet, dass** die optisch kennzeichnenden Baugruppen mit dem jeweilig zugeordneten Behälter unlösbar verbunden sind.

4. Behältersystem nach Patentanspruch 1, **dadurch gekennzeichnet, dass** das Behältersystem als optische Gestaltungsmerkmale für die Kennzeichnung der zugeordneten hierarchischen Ordnungsebenen (z. B. Land, Region, Stadt) fotografische Darstellungen und/oder Benennungen des jeweilig vom Reiseführer umfassten Gebietes mit dem optische Kennzeichnungen der übergeordneten und/oder untergeordneten Ordnungsebenen optisch kennzeichnend verbunden sind.

5. Behältersystem nach Patentanspruch 1, **dadurch gekennzeichnet, dass** das Behältersystem an mindestens einer Innenfläche des jeweilige Behälters mindestens ein mit Informationen des Reiseführers und/oder Werbeinformationen versehener Buchblock angebracht ist.

6. Behältersystem nach Patentanspruch 1, **dadurch gekennzeichnet, dass** die dem Nutzer das Behältersystems zugewandte, die oberste hierarchische Ordnungsebene optisch kennzeichnende Baugruppe des jeweiligen Behälters mit einer Solarzellenfolie (4) verbunden ist, die zur Spannungsversorgung eines lichtemittierenden Bauelementes (8) dient.

7. Behältersystem nach Patentanspruch 1, **dadurch gekennzeichnet, dass** der dem Nutzer des Behältersystems zugewandte Baugruppe des jeweiligen Behälters ein RFID-Empfänger (9) zugeordnet ist, der zur Erkennung des zu ermittelnden Behälters dienende Codesignale speichert, und dieser mit einem die zugeordneten graphischen Darstellungen signalisierenden lichtemittierenden Bauelement (8) und einer Solarzellenfolie (4) verbunden ist.

8. Behältersystem nach den Patentansprüchen 1 und 6, **dadurch gekennzeichnet, dass** dem RFID-Empfänger (9) ein zur Zusendung eines dem gesuchten Behälter zugeordneten Codesignales und zur Auslösung des Vergleiches dieses Signales mit dem abgespeicherten Codesignal dienender RFID-Sender (10) funktionell zugeordnet ist.

9. Behältersystem nach den Patentansprüchen 1, 6 und 7, **dadurch gekennzeichnet, dass** die Rückenbaugruppe (3) des Behälters mit dem RFID-Emptanger (9), des lichtemittierendes Bauelementes (8) und der Solarzellenfolie (4) verbunden ist und an dem Grundkörper (1) lösbar angebracht werden kann.

10. Behältersystem nach Patentanspruch 1, dessen Behälter unterschiedlichen standardisierten Abmessungen aufweisen, **dadurch, gekennzeichnet, dass** auf den Behälterflächen zwecks symmetrischer Aufbringung der Informationsmaterialien optisch unterschiedlich gestaltete Markierungsflächen aufgebracht sind, die bei der Einnahme der jeweiligen symmetrischen Sollpositionen der Informationsmaterialien zueinander innerhalb des die Informationsmaterialien umgebenden Randbereiches ein optisch in Form und/oder Farbe symmetrisches Bild der angrenzenden Markierungsflächen erzeugen.

11. Behältersystem nach den Patentansprüchen 1 und 10, **dadurch gekennzeichnet, dass** die Behälterflächen mindestens eine horizontale und/oder vertikale Bezugslinie (13;14) aufweisen, denen die unterschiedlich gestalteten Markierungsflächen (15,16) symmetrisch zugeordnet sind.

12. Behältersystem nach den Patentansprüchen 1 und 10, **dadurch gekennzeichnet, dass** die Markierungsflächen (15;16) streifenförmig ausgebildet sind, horizontal und vertikal zur jeweiligen Bezugslinie (13;14) angeordnet sind sowie eine unterschiedliche Farbdichte aufweisen.

13. Behältersystem nach den Patentansprüchen 1 und 10, **dadurch gekennzeichnet, dass** die streifenförmigen Markierungsflächen (15;16), die eine gleich große Farbdichte aufweisen, in jeweils gleichem Abstand zur jeweils zugeordneten parallelen Bezugslinie (13;14) angeordnet sind.

14. Behältersystem nach den Patentansprüchen 1 und 10, **dadurch gekennzeichnet, dass** die jeweilige der parallelen Bezugslinie (13;14) zugewandte Kante der streifenförmigen Markierungsflächen (15;16) als Positionskante für das zugeordnete jeweilige Format der Informationsmaterialien dient.

15. Behältersystem nach den Patentansprüchen 1 und 10, **dadurch gekennzeichnet, dass** die Materialfläche (18) der zur graphischen Kennzeichnung der jeweiligen hierarchischen Ebenen dienenden Gestaltungsfläche (20) und/oder die zur frei gestalteten textlichen Kennzeichnung dienende Gestaltungsfläche (19) gleichgroß sind und deren Anordnung im Rahmen eines standardisierten Formates (z. B. A4) so gewählt wird, dass wahlweise je nach Längs- oder Quernutzung der Gesamtfläche des Materiales (18) entweder standardisierte Fotoformate (z. B. 10 x 15 cm) oder die Unterformate (z. B. 6,5 x 4,5 cm) der Gestaltungsflächen (19; 20) ohne ungenutztem Materialanfall genutzt werden kann.

16. Verfahren zur Herstellung eines aus mindestens zwei Behältern bestehenden Behältersystems zur systematischen Aufbewahrung und Präsentation von Informationsmaterialien durch Zuordnung von graphischen Kennzeichnungen, **dadurch gekennzeichnet, dass** innerhalb eines zur systematischen Aufbewahrung und Wiederauffindung dienenden und aus hierarchischen Ebenen bestehenden Ordnungssystems den Behältern graphisches Kennzeichnungsteile der zutreffenden Ebenen zugeordnet und diese graphischen Kennzeichnungsteile jeweils mit mindestens einem gestalterisch frei geschaffenen Textteil verbunden werden.

17. Verfahren nach Patentanspruch 16, **dadurch gekennzeichnet, dass**

a) die frei gestalteten Tcxtteile in digitale Signale gewandelt,
b) diese den vorgegebenen graphischen Kennzeichnungsteilen der hierarchischen Ebenen mittels eines Computersystems zugeordnet werden,
c) die Darstellung und Gestaltung des Behältersystems computergestützt mittels steuerbar bewegter 3D - Darstellungen vorgenommen wird und
d) die das Behältersystem darstellenden digitalen Kennzeichnungsdaten und die Codesignale zur Wiederauffndung des jeweiligen Behälters auf einem mobilen Datenspeicher abgespeichert werden.

18. Verfahren nach den Patentansprüchen 16 und 17, **dadurch gekennzeichnet, dass** die Kennzeichnungsdaten der Behälter des Behältersystems mit den Daten von frei gestalteten graphischen Kenzeichnungsteilen und/oder frei gestalteten Textteilen der aufzubewahrenden Informationsmatcrialien verbunden werden.

19. Verfahren nach den Patentansprüchen 16 und 17, **dadurch gekennzeichnet, dass** dic Codesignale zur Wiederauffindung des jeweiligen Behälters gleichermaßen in dem mit einem RFID-Sender verbundenen mobilen Datenspeicher und in einem mit dem

**EP 2 239 148 A2**

ausgewählten und gestalteten Behälter verbundenen RFID-Empfänger gespeichert werden.

**Fig. 1**

Fig. 2

5    6    6    6    5

7    3    3.1    3.2    7

Fig. 3

5.1    6.1    6.2    5.2

7    3

Fig. 4

3   6                    5

Fig. 5

10                                    8

                                      9

RFID                                  3

11                                    4

Homepage

Fig. 6

Fig. 7

12

17

Fig. 8

Fig. 9

Fig. 10

Fig. 11

EP 2 239 148 A2

Fig. 12

EP 2 239 148 A2

Fig. 13

Fig. 14

Fig. 15

EP 2 239 148 A2

18

19

20

Fig. 16

18        19        20

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005014363 A1
- DE 8201083
- DE 3807345
- DE 10103436 A1